Europäisches Patentamt

European Patent Office

Office européen des brevets

(19)

(11) Veröffentlichungsnummer : **0 335 124 B1**

(12)

# EUROPÄISCHE PATENTSCHRIFT

(45) Veröffentlichungstag der Patentschrift :
**19.08.92 Patentblatt 92/34**

(51) Int. Cl.⁵ : **B62D 65/00**

(21) Anmeldenummer : **89103650.1**

(22) Anmeldetag : **02.03.89**

(54) **Montageeinrichtung zum automatischen Fügen von Aggregaten von der Unterseite her mit einer KFZ-Karosserie.**

(30) Priorität : **31.03.88 DE 3811107**

(43) Veröffentlichungstag der Anmeldung :
**04.10.89 Patentblatt 89/40**

(45) Bekanntmachung des Hinweises auf die
Patenterteilung :
**19.08.92 Patentblatt 92/34**

(84) Benannte Vertragsstaaten :
**DE ES FR GB SE**

(56) Entgegenhaltungen :
**EP-A- 0 092 021**
**EP-A- 0 138 038**
**DE-A- 3 432 803**
**DE-A- 3 545 449**
**FR-A- 2 602 200**
**GB-A- 2 075 437**
**GB-A- 2 114 067**

(73) Patentinhaber : **KUKA Schweissanlagen &**
**Roboter GmbH**
**Blücherstrasse 144**
**W-8900 Augsburg (DE)**

(72) Erfinder : **Schupp, Gerhard**
**Geisbergstrasse 29**
**W-8904 Friedberg (DE)**
Erfinder : **Tscheschlok, Klaus**
**Adalbert-Stifter-Strasse 8**
**W-8904 Friedberg (DE)**
Erfinder : **Maischberger, Johann, Dipl.-Ing.**
**Marktstrasse 22**
**W-8901 Dinkelscherben (DE)**

(74) Vertreter : **Ernicke, Hans-Dieter, Dipl.-Ing. et al**
**Schwibbogenplatz 2b**
**W-8900 Augsburg (DE)**

## Beschreibung

Die Erfindung bezieht sich auf eine Montageeinrichtung zum automatischen Fügen von Bauteilen, vormontierten Baugruppen oder dergleichen Aggregaten von der Unterseite her mit einer KFZ-Karosserie in einer Fügestation entsprechend dem Oberbegriff des Hauptanspruches.

Durch die DE-OS 35 45 449 ist eine solche Montageeinrichtung bekannt geworden, die aus einem die Karosserie zentriert tragenden, beweglich geführten und in der Fügestation zentriert arretierbaren Gehänge und aus einem mit Aufnahmeplatten für die Aggregate versehenen Montagerahmen besteht, an dem die Aufnahmeplatten parallel zur Rahmenebene verschiebbar angeordnet sind und der in der Fügestation von unten her gegen die Karosserie höhenverstellbar ist.

Das Ziel solcher Montageeinrichtungen besteht im allgemeinen darin, das Verbinden von Karosserie und Aggregaten einfach, schnell und sicher durchzuführen.

Hierzu wird beim Stand der Technik eine Fügehilfe benötigt, die nach dem Arretieren der Karosserie deren Lage erfaßt und die Aggregate danach ausrichtet. Diese Fügehilfe besteht aus einem komplizierten Such- und Verstellmechanismus, der in den freien Raum zwischen der Karosserie und dem damit zu verbindenden Aggregat eingeschwenkt werden muß. Der Suchteil dieser Fügehilfe tastet eine Zentrierbohrung oder einen Zentrierzapfen der Karosserie ab und vermittelt die Bewegungskomponenten bis zur Erreichung der Zentrierstellung über getriebetechnische Mittel auf eine Einrichtung, welche in gleicher Weise das schwimmend gelagerte Aggregat auf dem Montagerahmen bzw. einer Aufnahmeplatte in die Zentrierstellung verschiebt, wo dann die Aufnahmeplatte in ihrer Zentrierstellung festgeklemmt wird. Nun muß diese Fügehilfe wieder entfernt werden, damit die ausgerichteten Aggregate vermittels einer Hubbewegung des Montagerahmens in die Fügestellung gebracht werden können. In dieser Fügestellung werden der Montagerahmen und das Gehänge untereinander verriegelt, so daß die Verschraubung der Aggregate an einer anderen Stelle vorgenommen werden kann, wohin das Gehänge mit der Karosserie und dem Montagerahmen bewegt werden muß.

Der Erfindung liegt die Aufgabe zugrunde, diesen komplizierten Aufwand, der durch Anordnung und Steuerung der vorbekannten Fügehilfe gegeben ist, wesentlich zu verringern und damit eine Montageeinrichtung zum automatischen Fügen zu entwickeln, die einfacher gestaltet ist und schnellere Zentrier- und Fügebewegungen auszuführen gestattet.

Die erfindungsgemäße Lösung dieser Aufabe ergibt sich aus den kennzeichnenden Merkmalen des Hauptanspruches.

Mit diesem Gegenstand der Erfindung wird eine besondere Fügehilfe entsprechend dem Stand der Technik gänzlich vermieden. Das einzelne Aggregat sitzt vielmehr zentriert, aber abhebbar auf der zugeordneten Aufnahmeplatte, wobei die hierfür erforderlichen Zentriermittel zugleich der Zentrierung des Aggregates gegenüber der KFZ-Karosserie verwendet werden. Voraussetzung hierfür ist lediglich, daß die Aufnahmeplatte gegenüber dem Montagerahmen heb- und senkbar ausgebildet und in der angehobenen Stellung schwimmend parallel zur Rahmenebene beweglich ist. Beim Anheben des Montagerahmens ist noch keine genaue Fluchtung der Zentrierzapfen zu den Zentrierbohrungen der Karosserie gegeben. Diese genaue Fluchtung entsteht erst beim Eintauchen der Zentrierzapfen in die Zentrierbohrungen. Die dabei entstehenden Verschiebebewegungen sind wegen der schwimmenden Lagerung der Aufnahmeplatten ungehindert ausführbar. Nach dem Verschrauben der nunmehr fügegerecht liegenden Schraubstellen können die Aufnahmeplatten bzw. der damit verbundene Montagerahmen abgesenkt werden, wobei die Zentrierzapfen aus den Zentrierbohrungen der Karosserie mühelos herausgleiten.

Einzelne Merkmale der Erfindung sind an sich vorbekannt. So beschreibt die GB-A-20 75 437 eine Vorrichtung zum Zusammenbau von Fahrzeugkarosserien, wobei eine Anzahl von Zapfen mit Löchern in den Einzelteilen der Karosserie fluchtet, wodurch diese Einzelteile in die für den Zusammenbau erforderliche Lage gebracht werden. Eine ähnliche Anlage mit Positionierzapfen zeigt die GB-A-21 14 067 zum Schweißen einer Karosserie. Hierbei handelt es sich um einfache Zentrierzapfen, mit denen die Lösung der Aufgabe der Erfindung nicht ohne weiteres möglich ist.

Durch die DE-A-34 32 803 ist andererseits eine anhebbare Montageplatte bekannt, die auf ihrer Unterlage mittels Kugeln von Hand verschiebbar gelagert ist, wenn sie in eine angehobene Stellung verbracht worden ist. Durch diese Handverstellung soll das Werkstück in eine fügegerechte Lage verbracht werden, was besonders umständlich und zeitraubend ist.

In den Unteransprüchen sind zahlreiche Ausführungsvarianten und Weiterentwicklungen des Gegenstandes der Erfindung offenbart. Mit den Ansprüchen 2 bis 4 werden Details gezeigt, die das Anheben des Montagerahmens und die davon unabhängige Aushebebewegung der Aufnahmeplatten durch eine einzige Hubvorrichtung ermöglichen.

Die Ansprüche 5 und 6 befassen sich mit einer besonderen Schrauberanordnung, die den Relativbewegungen zwischen den Aufnahmeplatten und dem Montagerahmen zu folgen vermag und außerdem das Einsetzen der Schrauben in die zugeordneten Durchgangsbohrungen der Aggregate ermöglicht, bevor der Anhebe- und Zentriervorgang stattfindet.

Der Anspruch 7 befaßt sich mit einer einfachen Verriegelungsmaßnahme, welche das Verspannen des angehobenen Montagerahmens am Gehänge unabhängig von der Zentrierung der Aggregate an der Karosserie ermöglicht.

Einzelheiten der Erfindung ergeben sich aus der Zeichnung. In ihr ist die Erfindung schematisch und beispielsweise dargestellt. Es zeigen:

Fig. 1: eine Seitenansicht einer im Gehänge zentrierten KFZ-Karosserie mit einem Montagerahmen in angehobener Stellung,

Fig. 2: eine Vorderansicht der Anordnung gemäß Fig. 1 mit angehobener und abgesenkter Stellung des Montagerahmens,

Fig. 3: eine Draufsicht auf einen Montagerahmen mit darauf angeordneten Aufnahmeplatten,

Fig. 4 und 5: Vertikalschnitte nach der Linie IV - IV durch eine Zentrierstelle der Aufnahmeplatte gemäß Fig. 3 in verschiedenen Stellungen und

Fig. 6: einen Vertikalschnitt durch eine Verriegelungsstelle zwischen dem Gehänge und dem Montagerahmen gemäß der Linie VI - VI in Fig. 3.

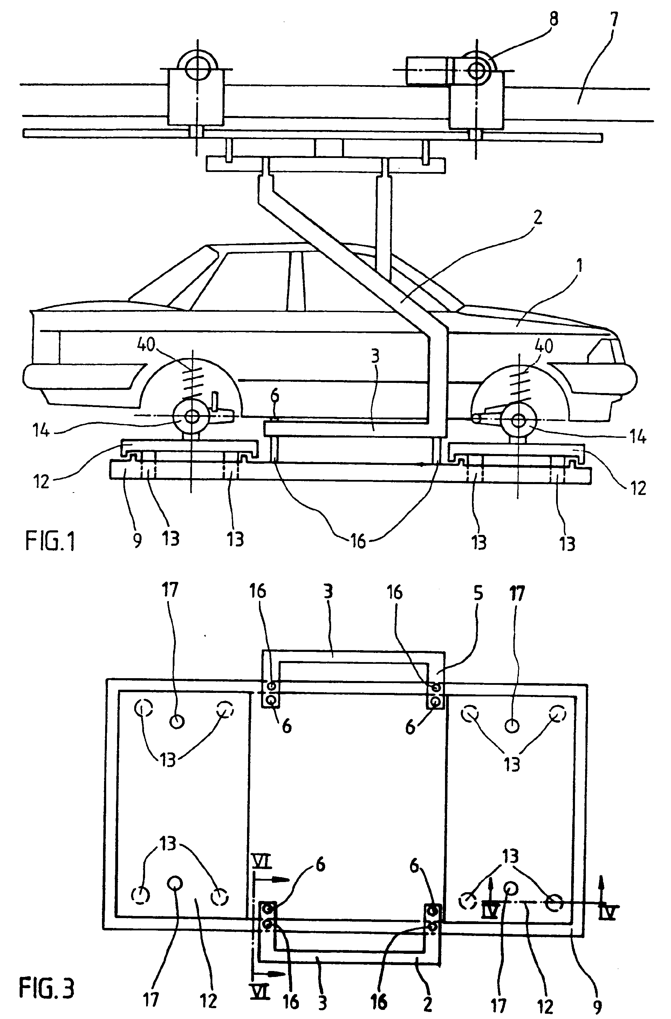

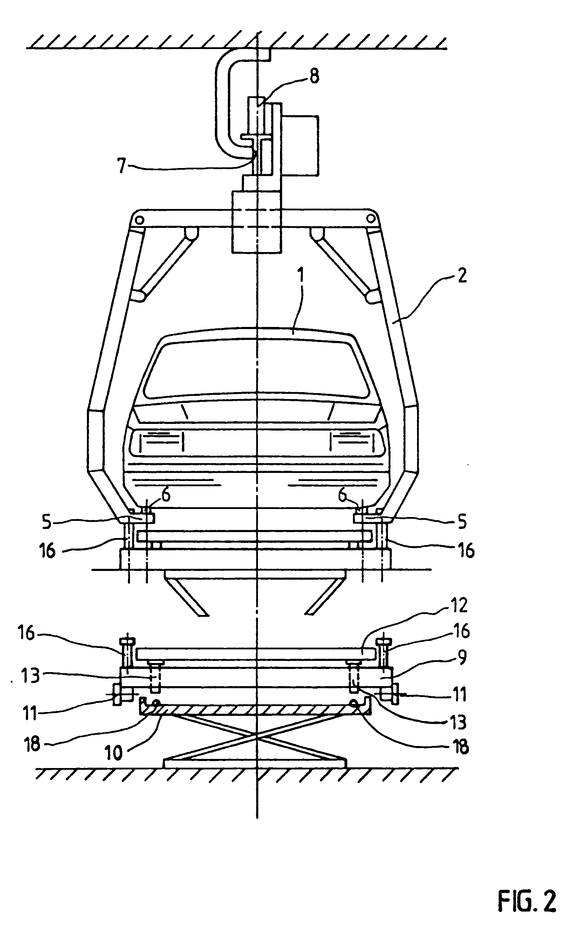

Die in den Figuren 1 und 2 dargestellte Montageeinrichtung geht von einem Gehänge (2) aus, das mit Hilfe eines Lauf-bzw. Fahrwerkes (8) längs einer Laufschiene (7) bewegt werden kann. In diesem Gehänge (2) ist eine KFZ-Karosserie (1) zentriert angeordnet. Zu diesem Zweck gehen vom einzelnen Joch (3) des Gehänges (2) nach innen ragende Arme 5) aus, die Zentrierungen (6) aufweisen, welche in passende Zentrierbohrungen der Karosserie (1) eingreifen. Hierbei empfiehlt es sich, zwei von vier Zentrierbohrungen als Langloch auszubilden. Die so im Gehänge (2) zentrierte Karosserie (1) wird in der Fügestation zentriert arretiert.

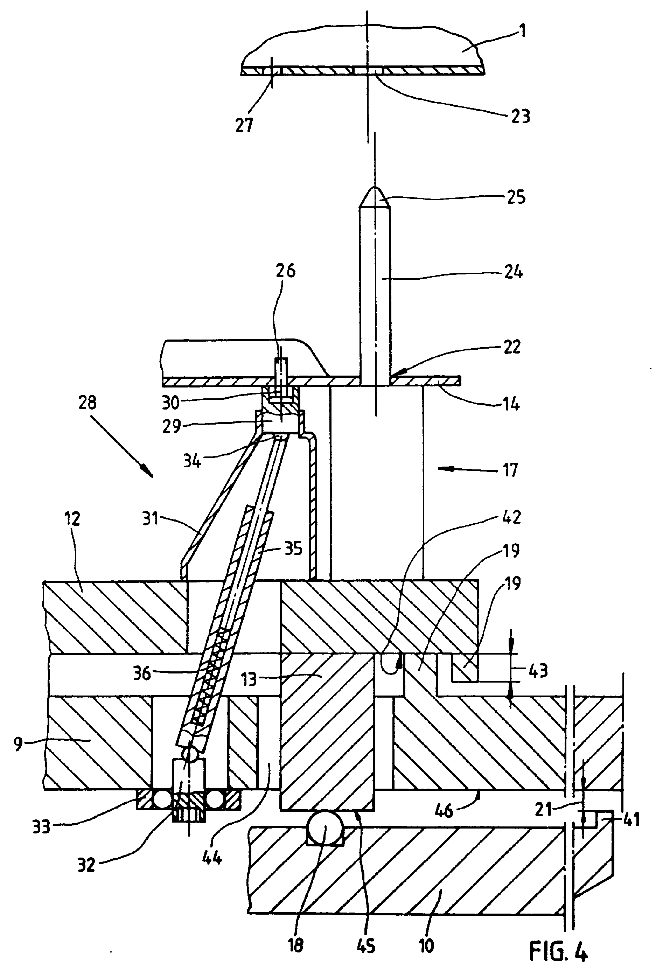

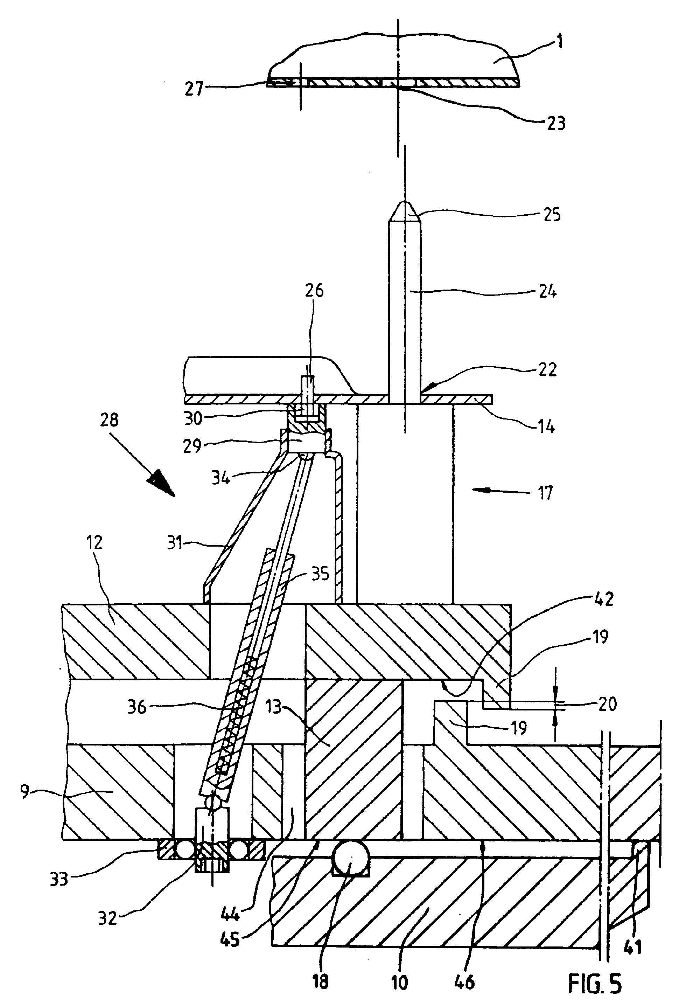

Die einzelnen Bauteile, Baugruppen oder ganz allgemein bezeichneten Aggregate (14) sollen durch einen Montagerahmen (9) von unten her fügegerecht an die Karosserie (1) herangebracht und dort befestigt werden. Zu diesem Zweck ist in der Fügestation ein Montagerahmen (9) vorgesehen, der längs eines Rollganges (11) herangeführt werden kann. Eine unterhalb des Montagerahmens (9) befindliche Hubeinrichtung (10) ist so ausgebildet, daß sie den Montagerahmen (9) sowie darauf befindliche Aufnahmeplatten (12) so weit anheben kann, daß die auf den Aufnahmeplatten (12) befindlichen Aggregate (14) in eine fügegerechte und zentrierte Lage zur Verschraubung mit der Karosserie (1) gelangen. Die konkrete Ausbildung und Anordnung der Aufnahmeplatte (12) ergibt sich aus dem Ausführungsbeispiel der Fig. 4 und 5.

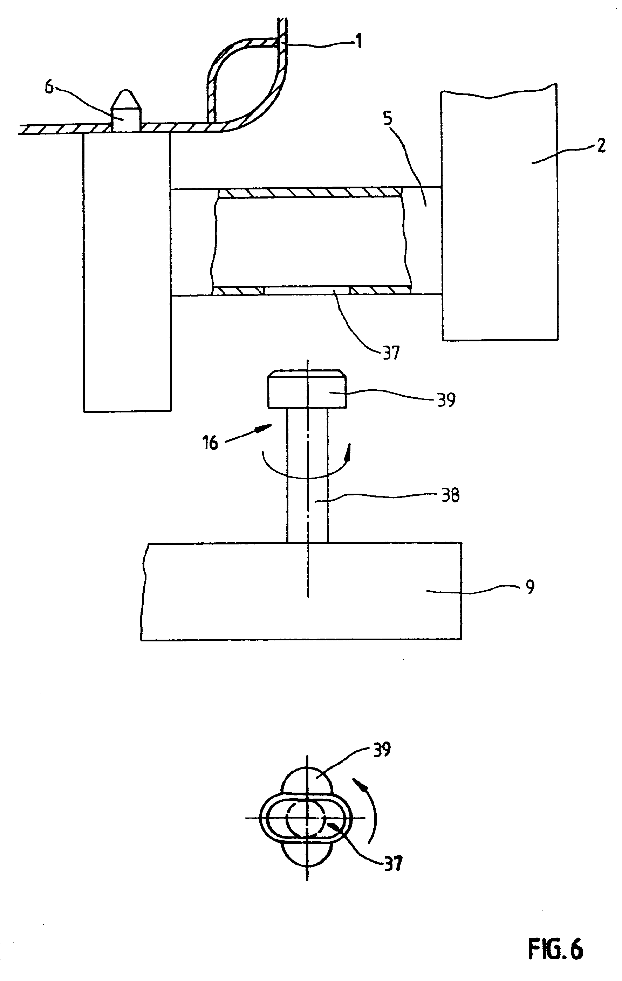

Fig. 3 ist die Draufsicht auf einen Montagerahmen (9) mit zwei darauf befindlichen Aufnahmeplatten (12) in einer vereinfachten Darstellung gezeigt, um die Lage der einzelnen Zentrier- und Verbindungsmittel anhand der Schnitte IV - IV und V - V für die Figuren 4 und 5 zu verdeutlichen. Danach weist jede Aufnahmeplatte (12) zwei Zentrierzapfen (17) auf, die der lagegerechten Anordnung der Aggregate (14) auf den Aufnahmeplatten (12) dienen (vgl. Fig. 4). Das Gehänge (2) mit dem Joch (3) ist mit dem Montagerahmen (9) über Verriegelungsbolzen (16) verbindbar (vgl. Fig. 6).

Das Ausführungsbeispiel der Fig. 4 und 5 zeigt an der einzelnen Aufnahmeplatte (12) aufrechte Zentrierzapfen (17), welche eine Bohrung (22) im Aggregat (14) durchgreifenden und einen überstehenden Zentrierzapfenteil (24) aufweisen. An seinem oberen Ende besitzt dieser Zentrierzapfenteil (24) eine Verjüngung (25), die dazu bestimmt ist, in eine Zentrierbohrung (23) an der Unterseite der Karosserie (1) einzugreifen, auch wenn die Achsen dieser Zentrierbohrung (23) und des überstehenden Zentrierzapfenteiles (24) nicht zueinander fluchten. Über diese Zentrierzapfenteile (24) und die Bohrungen (22) im Aggregat (14) ist das Aggregat (14) jedoch zentriert an der Aufnahmeplatte (12) angeordnet.

In der Grundstellung der Aufnahmeplatte (12) gemäß Fig. 4 sitzt diese mit ihrer Unterfläche (42) auf einem leistenförmigen Anschlag (19) des Montagerahmens (9) auf. Der einzelne, mit der Aufnahmeplatte (12) verbundene Zapfen (13) durchgreift eine Bohrung (44) des Montagerahmens (9) und ragt mit seiner Unterfläche (45) über eine Unterfläche (46) des Montagerahmens (9) hinaus.

Gegen diese Unterfläche (45) der Zapfen (13) trifft eine schwimmende Lagerung (18), die an der Oberseite der Hubeinrichtung (10) angeordnet ist.

Wenn die Hubeinrichtung (10) aus der Stellung der Fig. 4 weiter aufwärts bewegt wird, hebt die schwimmende Lagerung (18) den Zapfen (13) der Aufnahmeplatte (12) an, wodurch die Unterfläche (42) der Aufnahmeplatte (12) vom Anschlag (19) freikommt, wie dies Fig. 5 zeigt. In dieser Stellung fällt die Reibung zwischen dem Anschlag (19) und der Unterfläche (42) weg, so daß nun die Aufnahmeplatte (12) in einem gewissen Bereich parallel zum Montagerahmen (9) schimmend beweglich ist.

Diese schwimmende Beweglichkeit der Aufnahmeplatte (12) benötigt man deswegen, um beim weiteren Anheben der Hubeinrichtung (10), die nun über den Steg (41) auch den Montagerahmen (9) aufwärts bewegt, ein einwandfreies Eintauchen der Verjüngung (25) des überstehenden Zentrierzapfenteiles (24) in die Zentrierbohrung (23) der Karosserie (1) zu bewirken. Wie die Fig. 4 und 5 zeigen, muß man davon ausgehen, daß die Achsen dieser Bohrung (23) und des Zentrierzapfenteiles (24) beim Beginn der Hubbewegung nicht zueinander fluchten. Durch das exzentrische Eintauchen der Verjüngung (25) in die Bohrung (23) wird der Zentrierzapfenteil (24) zum seitlichen Ausweichen gebracht, bis die fluchtende Lage der genannten Achsen erreicht ist.

An dieser seitlichen Ausweichbewegung während des Hubes nimmt die gesamte Aufnahmeplatte (12) und mit ihr das darauf über die Zentrierzapfen (17,24) fixierte Aggregat (14) teil mit der Folge, daß die Schraube (26) genau deckungsgleich zur zugeordneten Schraubenbohrung (27) zu liegen kommt.

Um die geschilderte Zentrierung des Aggregates (14) während der Hubbewegung der Hubeinrichtung (10) sicherzustellen, sind im Ausführungsbeispiel der Fig. 4 und 5 mehrere Bedingungen einzuhalten.

Es muß zunächst dafür gesorgt werden, daß die Aufnahmeplatte (12) in der Grundstellung der Fig. 4 eine grob vorzentrierte Lage gegenüber dem Montagerahmen (9) einnimmt, weil nämlich beim Anheben des Montagerahmens (9) sichergestellt werden muß, daß die Verjüngung (25) des Zentrierzapfenteiles (24) noch gegen den Lochrand der Bohrung (23) treffen kann. Diese Vorzentrierung wird einerseits dadurch herbeigeführt, daß die Verriegelungsbolzen (16) (vgl. Fig. 2) des Montagerahmens (9) in passende Bohrungen des Gehänges (2) eingreifen, in dem die Karosserie (1) zentriert gehalten ist. Andererseits ist die Verschieblichkeit der Aufnahmeplatte (12) auf dem Montagerahmen (9) durch die sich relativ übergreifenden Anschläge (19) begrenzt. Der horizontale Abstand zwischen den Anschlägen (19) ist nicht größer als der maximal zulässige Querversatz der Achsen der Bohrung (23) und des Zentrierzapfenteiles (24). Dementsprechend groß ist auch das Spiel zwischen der Bohrung (44) des Montagerahmens (9) und dem Zapfen (13) der Aufnahmeplatte (12).

Auch die relative Hubbewegung der Aufnahmeplatte (12) gegenüber dem Montagerahmen (9) ist begrenzt. Es muß nämlich dafür Sorge getragen werden, daß die angehobene Aufnahmeplatte (12) nicht beliebig weit sich schwimmend bewegen kann, solange der Zentrierzapfen (17,24) noch nicht in die Bohrung (23) eingetaucht ist. Dies erreicht man beim Ausführungsbeispiel der Fig. 4 und 5 dadurch, daß der Abstand (21) zwischen dem Steg (41) der Hubeinrichtung (10) und der Unterfläche (46) des Montagerahmens (9) geringer als der Abstand (43) der Stirnflächen der Anschläge (19) in der Grundstellung gemäß Fig. 4 ist, wobei der Abstand (21) von einer Stellung ausgeht, bei der gemäß Fig. 4 die schwimmende Lagerung (18) gerade Kontakt mit der Unterfläche (45) des Zapfens (13) erhalten hat.

Wie die Fig. 5 zeigt, überdecken sich die Anschläge (19) in der angehobenen Stellung der Aufnahmeplatte (12) noch um die Überlappung (20), wodurch die seitliche Schwimmbewegung der Aufnahmeplatte (12) in der angehobenen Stellung begrenzt ist.

Aus der Darstellung der Fig. 4 ersieht man ferner, daß das überstehende Zentrierzapfenteil (24) auch die Schraube (26) überragt, damit die Zentrierung des Aggregates (14) erfolgt, bevor die Schrauben (26) in die Schraubbohrungen (27) eingreifen können.

Gemäß Fig. 4 und 5 ist weiterhin je Schraubstelle (26) eine Schrauberanordnung (28) vorgesehen, die so ausgebildet ist, daß sie den Verschiebebewegungen der Aufnahmeplatte (12) folgen kann.

Die einzelne Schraube (26) ist durch eine entsprechende Bohrung des Aggregates (14) hindurchgesteckt. Ihr Schraubenkopf sitzt in einer Aufnahme (30) einer Schraubnuß (29), die ihrerseits in einer Lagerung (31) der Aufnahmeplatte (12) geführt ist. Über ein Gelenk (34) greift eine Stange einer Teleskopanordnung (35) an, die durch eine Druckfeder (36) vorgespannt ist, so daß die Stangen der Teleskopanordnung (35) mit ihren Gelenken (34) auseinandergespreizt werden. Das untere Gelenk (34) sitzt an einer Schraubernuß (32), die ihrerseits in einer Lagerung (33) geführt ist, welche sich am Montagerahmen (9) befindet. Mithin kann ein geeigneter Antrieb von unten her auf die Schraubernuß (32) einwirken ohne Rücksicht darauf, in welcher Stellung sich die Schraubnuß (29) zufolge der Verschiebbarkeit der Aufnahmeplatte (12) befindet.

Diese Schrauberanordnung (28) bietet auch die Möglichkeit, daß der Schraubvorgang an einer anderen Stelle als in der Fügestation stattfinden kann. Voraussetzung hierfür ist, daß der Montagerahmen (9) mit dem Gehänge (2) in geeigneter Weise verbunden und von diesem Gehänge (2) in die entsprechende Station weiterbewegt werden kann.

Eine geeignete Verriegelungsvorrichtung hierfür ergibt sich aus dem Ausführungsbeispiel der Fig. 6. Man erkennt, daß an dem Arm (5) des Gehänges (2) sowohl die Zentrierung (6) für die Karosserie (1) am Gehänge (2) als auch die Verriegelung des Montagerahmens (9) gegenüber dem Gehänge (2) erfolgt. Zu diesem Zweck ist der Arm (5) als Hohlkörper ausgebildet, in dessen unterer Wand sich jeweils ein Langloch (37) befindet. Am Montagerahmen (9) ist an entsprechender Stelle jeweils ein Verriegelungsbolzen (16,38) mit einem auskragenden Kopf (39) vorgesehen, so daß beim Anheben des Montagerahmens (9) der Kopf (39) durch das Langloch (37) geführt wird. Der Verriegelungsbolzen (38) ist am Montagerahmen (9) drehverstellbar geführt. Eine Verdrehung des auskragenden Kopfes (39) um 90° führt zur Verriegelung des Verriegelungsbolzens (38) am Arm (5).

Zurückkommend auf Fig. 1 wird dargestellt, daß das Anheben des Montagerahmens (9) in die Fügestellung der Aggregate (14) gegen die Wirkung von Aggregat-Druckfedern (40) erfolgt, die bei der Ausbildung der Ag-

EP 0 335 124 B1

gregate als Vorderradachsen und Hinterradachsen regelmäßig vorhanden sind. Diese Anhebebewegung führt zum Verspannen der Federn (40), wobei üblicherweise die Verschraubung bei einer Vorspannung der Federn durchgeführt wird, welche der Belastung des fertigen Kraftfahrzeuges mit zwei Personen Belastung entspricht.

Wenn die in Fig. 6 beschriebene Verriegelung stattgefunden hat, kann die Hubeinrichtung (10) wieder in die Ausgangslage gemäß Fig. 2 abgesenkt werden. Dann führt die Vorspannung der Federn (40) dazu, daß die auskragenden Köpfe (39) der Verriegelungsbolzen (38) satt gegenüber der Innenwandfläche des Armes (5) verspannt sind. Beim Absenken der Hubeinrichtung (10) kann folglich auch die einzelne Aufnahmeplatte (12) in ihre untere Grundstellung zurückkehren, ohne daß sich an der Zentrierung des Aggregates (14) etwas ändert. Die Schrauben (26) verbleiben in ihrer Schraubbereitschaftsstellung, in der sie durch die Druckfeder (36) gehalten sind.

Stückliste

1 KFZ-Karosserie
2 Gehänge
3 Joch
5 Arm
6 Zentrierung Karosserie (Bolzen und Bohrung)
7 Laufschiene
8 Lauf- bzw. Fahrwerk
9 Montagerahmen
10 Hubeinrichtung
11 Rollgang
12 Aufnahmeplatte
13 Zapfen
14 Aggreagat (Bauteil, Baugruppe)
16 Verriegelungsbolzen
17 Zentrierzapfen
18 schwimmende Lagerung
19 Anschlag
20 Überlappung
21 Abstand
22 Bohrung im Aggregat
23 Zentrierbohrung in Karosserie-Unterseite
24 überstehender Zentrierzapfenteil
25 Verjüngung
26 Schraube
27 Schraubenbohrung
28 Schrauberanordnung
29 Schraubnuß
30 Aufnahme für Schraubenkopf
31 Lagerung
32 Schraubernuß
33 Lagerung
34 Gelenk
35 Teleskopanordnung
36 Feder
37 Langloch
38 Verriegelungsbolzen
39 auskragender Kopf
40 Aggregat-Druckfeder
41 Steg
42 Unterfläche
43 Abstand
44 Bohrung
45 Unterfläche
46 Unterfläche

5

# EP 0 335 124 B1

**Patentansprüche**

1. Montageeinrichtung zum automatischen Fügen von Bauteilen, vormontierten Baugruppen oder dergleichen Aggregaten (14) von der Unterseite her mit einer KFZ-Karosserie (1) in einer Fügestation, bestehend aus einem die Karosserie (1) zentriert tragenden, beweglich geführten und in der Fügestation zentriert arretierbaren Gehänge (2) und aus einem mit Aufnahmeplatten (12) für die Aggregate (14) versehenen Montagerahmen (9), an dem die Aufnahmeplatten (12) parallel zur Rahmenebene verschiebbar angeordnet sind und der in der Fügestation von unten her gegen die Karosserie (1) höhenverstellbar ist, dadurch **gekennzeichnet**, daß die einzelnem Aufnahmeplatten (12) gegenüber dem Montagerahmen (9) aus einer vorzentrierten Grundstellung in eine, eine begrenzte schwimmende Bewegung ermöglichende Arbeitsstellung anhebbar und mit aufrechten Zentrierzapfen (17) versehen ist, welche fluchtende Bohrungen (22) des auf der Aufnahmeplatte (12) befindlichen Aggregates (14) überstehend (24) durchgreifen und beim Anheben des Montagerahmens (9) mit seitlichem Versatz in zugeordnete Zentrierbohrungen (23) der Karosserie (1) eintauchen können, wobei die Ausrichtung des Aggregates (14) in die fügegerechte Lage durch schwimmende Ausgleichsbewegung der Aufnahmeplatte (12) während des Eintauchens der Zentrierzapfen (17,24) in die Zentrierbohrungen (23) beim Anheben des Montagerahmens (9) selbsttätig erfolgt.

2. Montageeinrichtung nach Anspruch 1, dadurch **gekennzeichnet**, daß die Anhebebewegung des Aggregates (14) zweistufig erfolgt, indem zunächst die Aufnahmeplatte (12) relativ zum Montagerahmen (9) angehoben wird und danach beide gemeinsam in die Fügestellung bewegt werden.

3. Montageeinrichtung nach Anspruch 1 oder 2, dadurch **gekennzeichnet**, daß die einzelne Aufnahmeplatte (12) mit mehreren, den Montagerahmen (9) mit Spiel durchdringenden Zapfen (13) auf der Hubeinrichtung (10) für den Montagerahmen (9) unter Zwischenfügung von Lagerungen (18) zur Gewährung einer schwimmenden Beweglichkeit der Aufnahmeplatte (12) in der angehobenen Stellung aufsitzt.

4. Montageeinrichtung nach Anspruch 1 oder folgenden, dadurch **gekennzeichnet**, daß die einzelne Aufnahmeplatte (12) in ihrer Grundstellung am Montagerahmen (9) durch seitliche Anschläge (19) mit Spiel vorzentriert ist, die in der angehobenen Stellung der Aufnahmeplatte (12) noch eine Überlappung (20) aufweisen.

5. Montageeinrichtung nach Anspruch 1 oder einem der folgenden, dadurch **gekennzeichnet**, daß die einzelne Aufnahmeplatte (12) und der Montagerahmen (9) an jeder Schraubstelle (26) je eine Lagerung (31,33) für eine federnd teleskopartig ausgebildete Schrauberanordnung (28) aufweisen.

6. Montageeinrichtung nach Anspruch 5, dadurch **gekennzeichnet**, daß die Schrauberanordnung (28) eine an der Aufnahmeplatte (12) drehbar gelagerte, einen Schraubenkopf aufnehmende Schraubnuß (29), eine im Montagerahmen (9) gelagerte Schraubernuß (32) und eine gelenkige sowie federnd teleskopartige, drehschlüssige Verbindung (35) beider Nüsse aufweist.

7. Montageeinrichtung nach Anspruch 1 oder einem der folgenden, mit einer Anordnung zum Befestigen des angehobenen Montagerahmens (9) an dem die Karosserie (1) tragenden Gehänge (2), dadurch **gekennzeichnet**, daß rohrförmige Arme (5) des Gehänges (2) Langlöcher (37) und der Montagerahmen (9) drehverstellbar gelagerte, die Langlöcher (37) durchgreifende Verriegelungsbolzen (16,38) mit auskragenden Köpfen (39) aufweist.

**Claims**

1. Mounting device for automatically joining components, pre-assembled sub-assemblies or such units (14), from the underside, to a motor vehicle body (1) in a joining station, comprising a suspension means (2), which supports the body (1) in centred manner, is movably guided and may be locked in the joining station in centred manner, and comprising a mounting frame (9) which is provided with receiver plates (12) for the units (14) and on which the receiver plates (12) are arranged to be displaceable parallel to the plane of the frame and which is height-adjustable in the joining station in the upward direction towards the body (1), **characterized** in that the individual receiver plate (12) may be raised with respect to the mounting frame (9) from a pre-centred initial position into a working position enabling a limited floating movement and are provided with upright centring pins (17) which in projecting (24) manner pass through flush bores (22) of the unit (14) located on the receiver plate (12) and when the mounting frame (9) is raised can penetrate with lateral offset into associated centring bores (23) of the body (1), the alignment of the unit (14) into the position for joining taking place automatically as a result of the floating compensation movement of the receiver plate (12) during penetration of the centring pins (17,24) into the centring bores (23) when the mounting frame (9) is raised.

2. Mounting device according to Claim 1, **characterized** in that the raising movement of the unit (14) takes place in two steps, in that first the receiver plate (12) is raised relative to the mounting frame (9) and then both are moved together into the joining position.

6

3. Mounting device according to Claim 1 or 2, **characterized** in that the individual receiver plate (12) is seated, by means of a plurality of pins (13) penetrating the mounting frame (9) with play, on the lifting device (10) for the mounting frame (9) with the interposition of bearings (18) for providing a floating movability of the receiver plate (12) in the raised position.

4. Mounting device according to Claim 1 or one of the subsequent claims, **characterized** in that the individual receiver plate (12) is pre-centred with play in its initial position on the mounting frame (9) by means of lateral stops (19) which still have an overlap (20) in the raised position of the receiver plate (12).

5. Mounting device according to Claim 1 or one of the subsequent claims, **characterized** in that the individual receiver plate (12) and the mounting frame (9) have at each screwing point (26) a respective bearing (31,33) for a screwing arrangement (28) constructed in the manner of a spring-loaded telescope.

6. Mounting device according to Claim 5, **characterized** in that the screwing arrangement (28) has a screw nut (29) which is mounted rotatably on the receiver plate (12) and which receives a screw head, a screw nut (32) which is mounted in the mounting frame (9) and an articulated non-rotatable connection (35) of both nuts in the manner of a spring-loaded telescope.

7. Mounting device according to Claim 1 or one of the subsequent claims, having an arrangement for securing the raised mounting frame (9) to the suspension means (2) supporting the body (1), **characterized** in that tubular arms (5) of the suspension means (2) have elongate holes (37), and the mounting frame (9) has locking bolts (16,38) which are mounted rotatably, penetrate the elongate holes (37) and have protruding heads (39).

**Revendications**

1. Dispositif de montage pour l'assemblage automatique de composants, de modules préassemblés ou de sous-ensembles semblables (14), à partir de la face inférieure, à une carrosserie d'automobile (1) dans un poste d'assemblage, constitué par un système de suspension (2) portant la carrosserie (1) d'une manière centrée, guidée en déplacement et pouvant être bloquée d'une manière centrée dans le poste d'assemblage, et par un cadre de montage (9), qui est pourvu de plaques de réception (12) pour les sous-ensembles (14) et sur lequel les plaques de réception (12) sont disposées de manière à être déplaçables parallèlement au plan du cadre et qui est réglable en hauteur par rapport à la carrosserie (1) dans le poste d'assemblage, **caractérisé** par le fait que les différentes plaques de réception (12) peuvent être soulevées par rapport au cadre de montage (9) depuis une position de base préalablement centrée, dans une position de travail permettant un déplacement flottant limité, et sont munies de broches de centrage montantes (17), qui traversent des perçages alignés (22) du sous-ensemble (14) situé sur la plaque de réception (12), en étant en saillie (24) par rapport au sous-ensemble et, lors du soulèvement du cadre de montage (9), peuvent pénétrer avec un décalage latéral dans des perçages associés de centrage (23) de la carrosserie (1), l'alignement du sous-ensemble (14) dans la position correcte pour l'assemblage s'effectuant automatiquement au moyen du déplacement de compensation flottant de la plaque de compensation (12) pendant l'introduction de la broche de centrage (17,24) dans les perçages de centrage (23) lors du soulèvement du cadre de montage (9).

2. Dispositif de montage suivant la revendication 1, **caractérisé** par le fait que le mouvement de soulèvement du sous-ensemble (14) s'effectue en deux étapes, par le fait que tout d'abord la plaque de réception (12) est soulevée par rapport au cadre de montage (9) et qu'ensuite ces deux unités sont déplacées en commun dans la position d'assemblage.

3. Dispositif de montage suivant la revendication 1 ou 2, **caractérisé** par le fait que la plaque de réception individuelle (12) pourvue de plusieurs broches (13) qui traversent avec jeu le cadre de montage (9) prend appui sur le dispositif de levage (10) pour le cadre de montage (9), moyennant l'insertion de paliers (18) servant à garantir une mobilité à l'état flottant de la plaque de réception (12) dans la position soulevée.

4. Dispositif de montage suivant la revendication 1 ou les suivantes, **caractérisé** par le fait que la plaque individuelle de réception (12) est préalablement centrée avec jeu, dans sa position de base, sur le cadre de montage (9) au moyen de butées latérales (19), qui présentent encore un chevauchement (20) lorsque la plaque de réception (12) est dans la position soulevée.

5. Dispositif de montage suivant la revendication 1 ou l'une des suivantes, **caractérisé** par le fait que la plaque individuelle de réception (12) et le cadre de montage (9) comportent, au niveau de chaque point de vissage (26), un palier respectif (31,33) pour un dispositif formant tournevis (28) réalisé avec un agencement élastiquement télescopique.

6. Dispositif de montage suivant la revendication 5, **caractérisé** par le fait que le dispositif formant tournevis (28) comprend un bloc (29) de logement de vis monté rotatif, qui reçoit une tête de vis, un bloc de vissage (32) tourillonné dans le cadre de montage (9), et une liaison articulée (35) entre les deux blocs, qui est élastiquement télescopique et réalise un blocage en rotation.

7. Dispositif de montage suivant la revendication 1 ou l'une des suivantes, comportant un dispositif pour fixer le cadre de montage (9) au système de suspension (2) portant la carrosserie (1), caractérisé par le fait que des bras tubulaires (5) du système de suspension (2) comportent des trous allongés (37) et que le cadre de montage (9) comporte des boulons de verrouillage (16,38), montés de manière à pouvoir être bloqués en rotation et traversant les trous allongés (37) et comportant des têtes saillantes (39).

FIG.1

FIG.3

9

FIG. 2

**FIG. 4**

FIG. 5

FIG.6